# EUROPEAN PATENT APPLICATION

(11) **EP 1 504 669 A1**
(43) Date of publication of application: **09.02.2005**
(21) Application number: 03746012.8
(22) Date of filing: 28.03.2003
(51) Int. Cl.: A21D 13/08

(54) **METHOD FOR PRODUCING A WAFER ARTICLE FOR A FAT-CONTAINING CONFECTIONERY PRODUCT**

(30) Priority: 04.04.2002 RU 2002108571
(71) Applicant: Golovanov, Leonid Mikhailovich, Moscow, 121293 (RU); Golovanova, Tatyana Iliinichna, Moscow, 121293 (RU); Golovanova, Olga Leonidovna, Moscow, 121293 (RU)
(72) Inventor: Golovanov, Leonid Mikhailovich, Moscow, 121293 (RU); Golovanova, Tatyana Iliinichna, Moscow, 121293 (RU); Golovanova, Olga Leonidovna, Moscow, 121293 (RU)
(74) Representative: Jehan, Robert
(86) International application number: PCT/RU2003/000123
(87) International publication number: WO 2003/084335

(57) **Abstract**

The inventive method consists in simultaneously baking at least two parts (1,2) composing each wafer article (3), connecting said parts (1,2) along the mating edges thereof in such a way that the wafer article is produced in the form of a reservoir for a fat-containing confectionery product.

## Description

### Field of the Invention

The present invention relates to the food industry, more particularly, to the method for producing a wafer product for a fat-containing confectionery product.

### Background Art

The existing methods for baking wafers are based on baking wafer molded cones, truncated cones, "torches", double cones, cups and twisted cones in press molds, as well as other kinds of similar products. With the growing consumption of ice cream in cafeterias, restaurants, bar, etc. (non-industrial ice cream), wafers of the above kinds become uninteresting to the customers.

A method is known for producing wafers for ice cream, molded sugar cups and other wafer products (see the booklet "HOCHLEISTUNGS EISTUTEN-BACKAUTOMATEN" by FRANZ HAAS WAFFELMASCHINEN INDUSTRIESELLSCHAFT M.B.H., Austria, 1995) taken as the prototype. The method consists in that a wafer article of each of the desired forms is baked from dough, said dough being poured into a wafer baking machine with such a configuration of its inner cavity that a wafer article of a particular form can be produced.

To produce wafer articles of various volumes and forms a big number of wafer baking machines which are difficult to manufacture are required, since a wafer machine of a particular configuration is suitable for baking wafers of only one form.

### Summary of the Invention

The technical effect of the proposed invention consists in that wafer articles of various irregular forms are produced by using wafer baking machines of simple forms in the course of non-industrial ice cream production.

Said technical effect is achieved by means of the inventive method for producing a wafer article for a fat-containing confectionery product by baking the same from dough, said method consisting in simultaneously baking at least two parts composing each wafer article, then connecting said parts along the mating edges thereof so as to produce a wafer article in the form of a reservoir for a fat-containing confectionery product, said parts preferably being connected in such a way that they overlap along the mating edges thereof, and said edges having an allowance.

The parts composing a wafer article are connected in such a way that the form and/or the size of said article can be changed by means of moving said parts relatively each other.

As the parts of an article are connected said article may acquire such a form which enables a change of its initial position when exposed to external force.

The wafer article according to the invention may be shaped so as to look like animals, birds, characters of cartoons and fairy tales, vegetables and fruits, flowers and plants, signs of the zodiac, geometric figures, technical equipment, weapons and collages. Moreover, as parts of an article of a particular form are connected fragments are used which compose an article of another form. A layer of confectionery powder, for example, glaze or glaze with nuts, or wafer crumb is applied on the outer surface of the parts of an article.

Therefore, the proposed method makes it possible to produce various wafer articles of irregular forms using wafer baking machines of simple forms, said wafer articles having esthetic meaning, encouraging creativeness, forming and raising one's spirits.

### Brief Description of the Drawings

The proposed invention is further explained by way of particular examples of embodiments thereof and the accompanying drawings in which:
Fig. 1 shows a general view of a wafer article for a fat-containing confectionery product,
Fig. 2 shows a part of said wafer article,
Fig. 3 show a section taken along line III-III in Fig. 1,
Fig. 4 shows wafer articles of various forms produced from the same parts,
Fig. 5 shows a wafer article of a form which enables a change of its initial position,
Fig. 6 shows a wafer article having interchangeable parts.

### Best Mode of Carrying Out the Invention

The proposed method for producing a wafer article for a fat-containing confectionery product is carried out the following way.

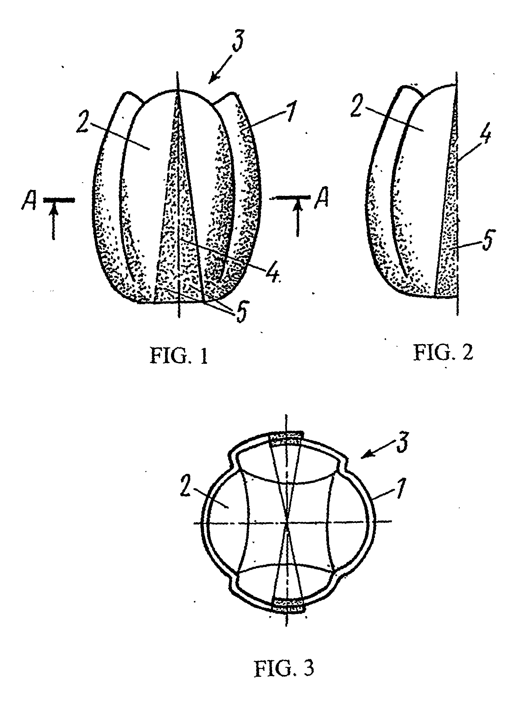

To produce a wafer article of irregular form at least two parts 1 and 2 (Fig. 1) are baked from dough using a press mold, for example, made of cast iron or another material, said parts comprising separate simple elements of an article 3. The number of said parts depends on how irregular is the form of the article 3, the same elements being suitable for baking a number of articles of various forms. The article can be divided into parts both with straight and curved lines, each part 1 and 2 having an allowance 5 along division line 4. Then, said parts 1 and 2 are connected along the mating edges thereof, for example, in such a way that they overlap 2 mm and more from the part edges, said connection not needing any gluing. As the parts 1 and 2 are connected the wafer article 3 of desired form is produced in the form of a reservoir for a fat-containing confectionery product, for example, ice cream, cream, souffle, fudge mass or paste, fruit or vegetable pure, dessert, fudge, caramel, praline, mousse, kefir, yogurt.

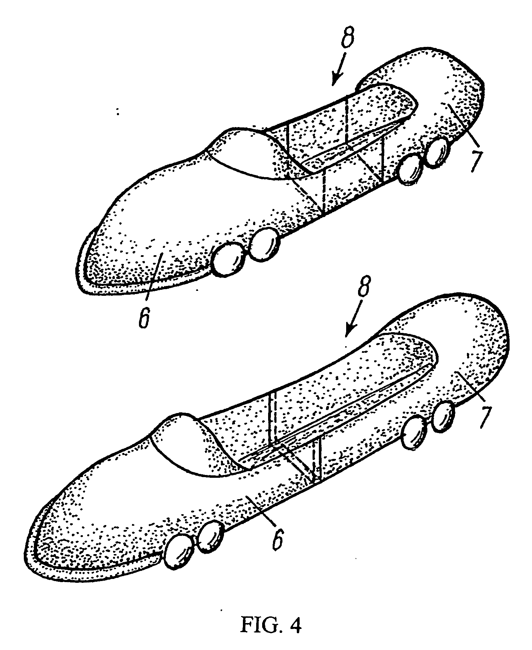

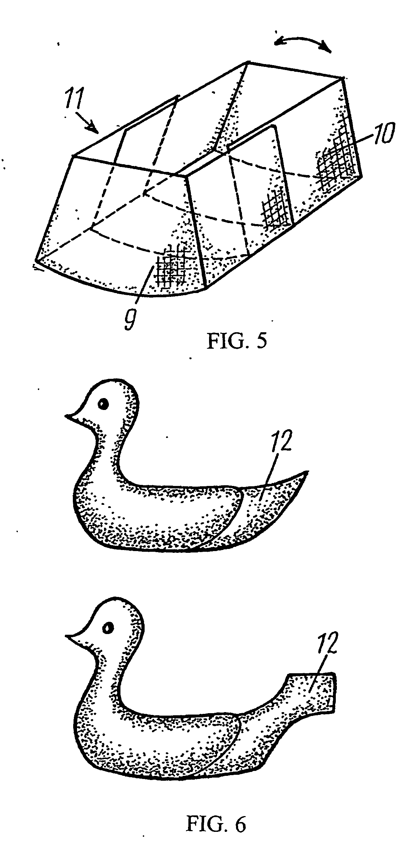

Parts 6 and 7 composing the wafer article 8 are connected in such a way that the form of said article 8 can be changed by moving the parts thereof relatively each other, as shown in Fig. 4. Moreover, the parts 9 and 10 (Fig. 5) can be baked in such a way that when connected the article 11 will acquire a form which enables a change of its initial position when exposed to external force.

The wafer article may be shaped so as to look like animals, birds, characters of cartoons and fairy tales, vegetables and fruits, flowers and plants, signs of the zodiac, geometric figures. Moreover, as parts of an article of a particular form are connected fragments 12 are used which compose an article of another form. Therefore, the produced article has esthetic meaning, encourages creativeness, forms and raises one's spirits.

A layer of confectionery powder, for example, glaze or glaze with nuts, or wafer crumb is applied on the outer surface of the parts of an article.

### Industrial Applicability

The proposed invention may be advantageously used for producing all kinds of wafers for ice cream, souffle, fudge mass or paste, fruit or vegetable pure, dessert, fudge, caramel, praline, mousse, kefir, yogurt.

## Claims

1. A method for producing a wafer article for a fat-containing confectionery product **characterized in that** at the same time wherein at least two parts (1, 2) composing each wafer article (3) are baked from dough, the after said parts (1, 2) are connected along the mating edges thereof to produce said wafer article (3) in the form of a reservoir for a fat-containing confectionery product.

2. The method according to claim 1 **characterized in that** as the parts (1,2), composing the wafer article (3) are connected so as to overlap along the matching edges which having allowances (5).

3. The method according to anyone of claims 1 and 2 **characterized in that** the parts (6, 7) composing the wafer article (8) are connected in such a way that its form and/or size can be changed by moving the parts (6, 7) relatively each other.

4. The method according to anyone of claims 1 and 2 **characterized in that** the parts (9, 10) of the article (11) are connected said article acquires a form which enables a change of its initial position when exposed to external force.

5. The method according to anyone of claims 1-4 **characterized in that** the parts (1, 2 or 6, 7, or 9, 10) of the article (3 or 8, or 11) are connected in such a way that it has the form of one of the figures selected from the group consisting of animals, birds, characters of cartoons and fairy tales, vegetables and fruits, flowers and plants, signs of the zodiac, geometric figures, technical equipment, weapons and collages

6. The method according to anyone of claims 1-5 **characterized in that** as the parts of an article of a particular form are connected fragments (12) are used composing an article of another form.

7. The method according to anyone of claims 1-6 **characterized in that** a layer of confectionery powder, for example, glaze or glaze with nuts, or wafer crumb is applied on the outer surface of the parts (1, 2 or 6, 7, or 9, 10) of the article (3 or 8, or 11).

1. A method for producing a wafer article for a fat-containing confectionery product wherein at least two parts (1, 2) composing each wafer article (3) are baked from dough, said parts (1, 2) are connected along the mating edges thereof to produce said wafer article (3) in the form of a reservoir for a fat-containing confectionery product, said method **characterized in that** the article (3) is divided into parts (1, 2) having allowances (5) along the division line (4) thereof, said parts (1, 2) being connected so as to overlap along the matching edges thereof in order to produce the wafer article (3) of desired form.

2. The method according to claim 1 **characterized in that** the parts (6, 7) composing the wafer article (8) are connected in such a way that its form and/or size can be changed by moving the parts (6, 7) relatively each other.

3. The method according to claims 1 and 2 **characterized in that** as the parts (9, 10) of the article (11) are connected said article acquires a form which enables a change of its initial position when exposed to external force.

4. The method according to anyone of claims 1-3 **characterized in that** as the parts of an article of a particular form are connected fragments (12) are used composing an article of another form.

5. The method according to anyone of claims 1-4 **characterized in that** the parts (1, 2 or 6, 7, or 9, 10) of the article (3 or 8, or 11) are connected in such a way that it has the form of one of the figures selected from the group consisting of animals, birds, characters of cartoons and fairy tales, vegetables and fruits, flowers and plants, signs of the zodiac, geometric figures, technical equipment, weapons and collages.

6. The method according to anyone of claims 1-5 **characterized in that** a layer of confectionery powder, for example, glaze or glaze with nuts, or wafer crumb is applied on the outer surface of the parts (1, 2 or 6, 7, or 9, 10) of the article (3 or 8, or 11).
